Europäisches Patentamt

European Patent Office

Office européen des brevets

(11) Publication number: **0 177 020 B1**

# EUROPEAN PATENT SPECIFICATION

(45) Date of publication of patent specification: 05.06.91    (51) Int. Cl.⁵ **G07C 5/10**

(21) Application number: **85112424.8**

(22) Date of filing: **01.10.85**

(54) **System for recording operation data of a work machine.**

(30) Priority: **03.10.84 JP 207767/84**
**03.10.84 JP 207768/84**

(43) Date of publication of application:
**09.04.86 Bulletin  86/15**

(45) Publication of the grant of the patent:
**05.06.91 Bulletin  91/23**

(84) Designated Contracting States:
**BE DE FR GB IT**

(56) References cited:
**EP-A- 0 172 553**
**DE-A- 3 232 416**
**DE-A- 3 240 773**
**US-A- 4 402 054**

(73) Proprietor: **Shin Caterpillar Mitsubishi Ltd.**
**2-3, Kitaaoyama 1-chome**
**Minato-Ku Tokyo(JP)**

Proprietor: **MITSUBISHI JUKOGYO KABUSHIKI**
**KAISHA**
**5-1, Marunouchi 2-chome Chiyoda-ku**
**Tokyo 100(JP)**

(72) Inventor: **Hisatake, Tsuneo CATERPILLAR**
**MITSUBISHI LIMITED**
**2-3, Kitaaoyama 1-chome**
**Minato-ku Tokyo(JP)**
Inventor: **Atono, Tadashi CATERPILLAR MIT-**
**SUBISHI LIMITED**
**2-3, Kitaaoyama 1-chome**
**Minato-ku Tokyo(JP)**
Inventor: **Morita, Izuru CATERPILLAR MIT-**
**SUBISHI LIMITED**
**2-3, Kitaaoyama 1-chome**
**Minato-ku Tokyo(JP)**
Inventor: **Tozawa, Shoji CATERPILLAR MIT-**
**SUBISHI LIMITED**
**2-3, Kitaaoyama 1-chome**
**Minato-ku Tokyo(JP)**

Inventor: **Fujiwara, Masao Sagamihara Machinery Works**
**MITSUBISHI JUKOGYO K.K. 3000 Tana Sagamihara-shi Kanagawa(JP)**
Inventor: **Nakamura, Yoshinobu Sagamihara Machinery Works**
**MITSUBISHI JUKOGYO K.K. 3000 Tana Sagamihara-shi Kanagawa(JP)**

(74) Representative: **Pellmann, Hans-Bernd, Dipl.-Ing.**
**Patentanwaltsbüro Tiedtke-Bühling-Kinne-Grupe-Pellmann-Grams-Struif**
**Bavariaring 4**
**W-8000 München 2(DE)**

## Description

This invention relates to a system for recording operation data of a working machine, wherein details of the actual work of the working machine such as a vehicle, an off-highway truck, a loader and other construction machine or a tool machine are digitally stored in a transportable external memory for output data.

In order to record digitally the actual performance of a working machine for the control thereof in the fields of automotive as well as construction machine industries, some systems are proposed such as disclosed in JP-A-58-4493 describing a data-controlling system which sequentially records velocity of an automobile, travelling distance and engine revolution, JP-A-58-60212 showing a data-controlling system which judges that engine revolution is classified in any of a plurality of the predetermined patterns and records accumulate time for each pattern, and JP-A-56-118166 and JP-A-58-148912 describing data-controlling systems which record and process the work data of each of other components.

However, the conventional control systems deal only with the recording of an actual work data in a single method, and are not aimed at recording both of the sequential data and statistic data, nor reflecting on a work schedule or at optimizing the actual work.

Even if a work schedule or optimizing data may be stored in a memory of computer in the conventional system to make a comparison with actual work data, they can not deal fully with a variable work which differs from day to day due to their limited memory data stored therein.

DE-A 32 32 416 discloses a system according to the preamble of claim 1.

It is an object of this invention to provide a multi-recording of sequential data and statistic-processed data, which are processed from the same actual work data.

This object is achieved by the features of claim 1.

Brief Description of the Drawings

Fig. 1 is a block diagram illustrating the invention; and
Fig. 2 is a block diagram showing another embodiment of this invention, wherein operation data are dually stored in an external memory.

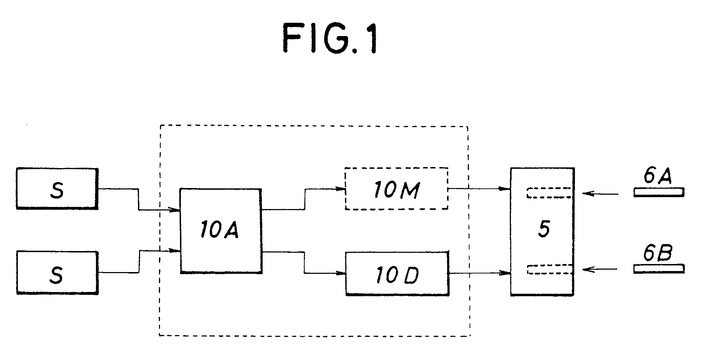

The invention will be explained with reference to a block diagram shown in Fig. 1.

The system proposed by this invention is characterized by the following features.

(A). A sensor or measuring means S is provided to detect or measure an actual performance of the work machine;

(B). A work data-processing means 10A is provided to process the measured signals (or detected signals) obtained through the said sensor or measuring means S to obtain sequential work data;

(C). A statistic processing means 10D is provided to process the said sequential work data according to a certain statistic technique to obtain statistic data;

(D). A data recording means 5 is provided to write and record each of the sequential work data which is obtained from the said work data-processing means 10A and the statistic data which is obtained from the statistic processing means 10D after a certain statistic processing to a transportable external memory 6A for storing the sequential work data and a transportable external memory 6B for storing the statistic data, which are attached detachably;

(E). A monitoring means 10M is provided to judge whether an actual work data is included in a predetermined unusual pattern and record the work data with high density to shorten intervals for sampling the actual work data of a sensor or measuring means S, when the said data is included in the unusual pattern.

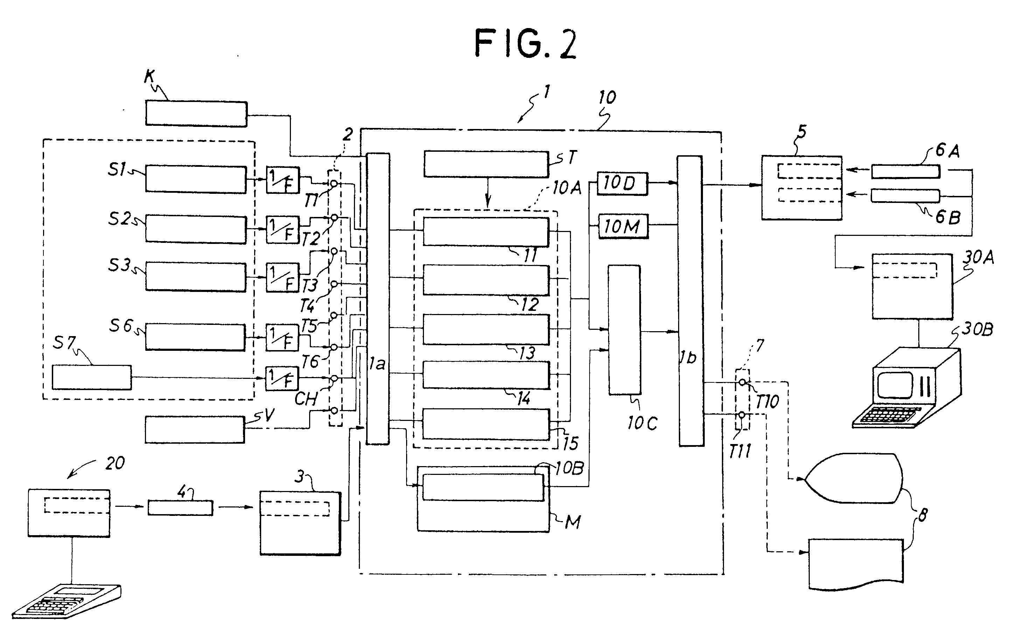

A work data-recording system 1 of this invention will be further explained with reference to Fig. 2 which illustrates an embodiment as applied to an off-highway truck.

This work data-recording system 1 comprises a transportable external memory 4 for input data, a transportable external memory 6 for output data, a data reading means (reader) 3 which is capable of detachably mounting the external memory 4 for input data, a data writer 5 which is capable of detachably mounting the external memory 6A.6B for output data, a system main body 10 constituting a microcomputer comprising a measured signal input terminal 2 and an external display output terminal 7, a sensor or measuring means S to be connected to the main body 10, and an external display means 8.

The measurement signal input terminal 2 in this embodiment has six terminals T1-T6. The terminal T1 is a terminal for connecting with a speed sensor S1, which detects the speed of a vehicle from the rotation speed of wheels or a speed meter. The terminal T2 is a terminal for connecting with an engine speed sensor S2, which detects the engine speed. The terminal T3 is a terminal for connecting with a dump-body hoist cylinder switch S3, which detects the number of up and down movements of a vessel. The terminals T4 and T5 are terminals for extension. The terminal T6 is a terminal for connecting with a starter switch (a disconnector switch) S6 of a vehicle.

These sensors S1-S6 supply measurement signals (or detection signals) to the microcomputer 10 through an interface I/F. This microcomputer 10 is connected to a battery V of a vehicle through a connector cable to receive electric power.

In this embodiment, these sensors S1-S6 are all mounted on a vehicle. However, these measured signals may be supplied through a measurement device set up out of the vehicle to the microcomputer 10.

Reference mark CH indicates a transmitting terminal for RS232C, which is utilized for storing data on the loaded weight which are measured with a load weight-measuring device (or dumpscale) S7 set up on the operation site in the microcomputer 10 via a serial transmission.

The input terminal 2 communicating with an input port 1a of the microcomputer 10 is so designed as to allow connections through the interface I/F with various kinds of sensors or measuring devices for detecting operation control data in addition to the sensor mentioned above, and therefore has extendable and general-purpose properties.

The IC card reader 3 performs readings of the operation data-processing program and the operation data-control program stored in the IC card 4, and supplies the information thus obtained to the microcomputer 10.

In this embodiment, an IC card is utilized for the external memory for input data as well as for the external memory for output data.

In the IC card 4 for storing an input data, there is stored work schedule data including optimum or prescribed target values to be followed in the performance of a prescribed work by each component of a work machine.

The optimum values define optimum operation conditions (an optimum efficiency) of each of components of a work machine, such as an optimum engine speed depending on weather, kinds of load, load weight and vehicle speed. On the other hand, the prescribed target values are preliminarily determined according to the work contents to be conducted in one day such as a target work volume or a target transport weight.

In addition to above data, a work menu or a work procedure (a work program) to be performed in each day, an accomplishment ratio-determining procedure of the accomplishment-determining means 10C, an operation condition-judging procedure (program) of the operation condition-judging means to be explained below, or other useful control information for the work or control may be stored as a unit time work menu in the external memory for input data.

Into the IC card 4 for storing input data is also written work schedule data mentioned above by an information-set up (writing) means 20 of the external computer to be operated by a controller.

This IC card 4 is inserted into the card-receiving section of the data reader 3 connected to the system main body which is mounted on a vehicle to transfer the information written in the IC card 4 to the data-storing means 10B.

The system main body 10 further comprises a work data-processing means 10A which converts the measured signals obtained from the sensor for detecting the operation conditions of each component of an off-highway truck or from the measuring means S for measuring the operation condition of the off-highway truck (for example load weight-measuring device) into actual work data.

The microcomputer 10 into which a program stored in the IC card 4 is to be read according to this embodiment comprises: a vehicle speed data processing means 11 to obtain vehicle speed data at a unit time interval on the basis of signals supplied from the vehicle speed sensor S1; a travelling distance data-processing means 12 which makes use of the vehicle speed data and travelling time data obtained from a timer T of the microcomputer 10; an engine speed-processing means 13 to determine the engine speed at a unit time interval on the basis of signals supplied from the engine speed sensor S2; a dump interval data-processing means 14 for obtaining dump interval data from the timer T on the basis of signals from the dump-switch S3, and for calculating a travelled distance corresponding to the dump interval data; and a load weight data-processing means 15 which determines load weight data supplied from the load weight-measuring device as a load weight value at the time of the dumping operation.

The actual work data thus obtained from the work data-processing means 10A are transferred to the data writer 5 either as time sequence actual work data, or as statistical data obtained by statistically processing the time sequence actual work data in the statistical processing means 10D.

This actual work data may be any one of those which is subjected to a time-sequential treatment, a multiplying treatment or a statistical treatment. Any one of the data or as mentioned below both of the data may be multi-recorded in a separate IC card 6 for output data 6 (see Fig. 2).

These actual work data may include those of a total distance, engine revolution, vehicle speed, fuel consumption, hydraulic pressure of a work machine and actual working time.

These actual work data are transferred to the accomplishment-determining means 10C.

This accomplishment-determining means 10C performs a comparison between actual work data and optimum or prescribed target values at a prescribed work time which are invoked from the data-storing means 10B storing the optimum or prescribed target values which are input from the IC card 4.

After a difference between the both data is calculated, an operation instruction pattern which conforms to the difference is selected among the patterns preliminarily stored in the data-storing member 10B or a memory M. Based on this operation instruction pattern thus selected, an operation instruction is indicated in an external display portion of the optimizing operation adjustment means 8 mounted on a vehicle, such as LED or CRT to notify it to an operator.

Those instruction patterns are prepared on the basis of the actual work data of the instant time and classified so that an operation instruction (such as for example a switching instruction from a low idle to a high idle, or speed control instruction) which is required for optimizing the operation conditions of each of the components (optimum efficiency values) can be given to an operation means.

Based on this instruction, or as a result of the feed-back of the operation data, the operator can perform an optimized operation of an off-highway truck.

When the target value for a work is preliminarily determined, for example, in the case of transporting, a predetermined amount of soil, the net load weight of each off-highway truck are totaled and then the total weight is subtracted from the target value to give the balance. This balance is then indicated as a remaining load weight or as the times of transportation in a digital display so that the operator can definitely find out the remaining amount of work.

Instead of employing the external display as the adjustment measure 8 for optimizing the work after a judgement is made by the accomplishment-determining means 10C, an automatic control mechanism (not shown) may be provided to automatically carry out the actually instructed operation.

In this embodiment, only one IC card is employed for the input data IC card 4 stored with a work schedule data as well as for the output data IC card 6 stored with an actual work data. However, a couple of separate IC cards may be employed individually for the input data IC card 4 and for the output data IC card.

The data stored in the input IC card 4 is read out by the data reader 3 in the above embodiment and all of the data are stored in the data-storing means 10B of the system main body. After all of the data have been stored in the data-storing means 10B, the data-erasing mechanism C is worked to erase the data (work schedule data) out of the IC card inserted in the insert portion of the data reader 3. The data may also be erased in the data writer 5. The input IC card 4 erased of the data is now converted to the output IC card 6.

This converted output IC card 6 is then inserted to the insert portion of the data writer 5 thereby making it ready to write actual work data in the external memory 6 for output.

The operation data-processing procedure to be conducted on each of the measurement signals will be explained as follows.

(1) Revolution number of the engine

In this embodiment, the data of the revolution number of the engine per predetermined time period is stored as pulse number and therefore is converted into the revolution number (when one revolution number is equal to four pulses, the revolution number can be calculated as : Pulse Number 4), and stored in the data memory 6 in the form of time-sequence data in every unit time, or in the form of histogram as equally divided revolution number zones.

(2) Travelling Speed and Distance

The speed data are calculated on the basis of measurement signals from a speed meter, or by multiplying the revolution number per predetermined time period by the length of the circumference of the wheel.

In this case also, these data can be stored in the form of time-sequence data or histogram in the IC card 6.

The travelling distance is calculated by integrating a travelled distance with respect to time.

(3) Weight of Load and Number of Dumping

When the switch-on of the dumping is recognized, the time of the switch-on, the travelled distance from the moment of increased engine revolution up to present time, the weight of load immediately before the dumping operation, which is transmitted through RS232C interface from a load weight-measuring device such as a bucket scale, are recorded and stored in the IC card 6.

In this case, it is preferred that the writing of the load weight is conducted upon the input of a command to write.

If the load weight-measuring device is so designed that the data of the load weight are extracted from the change in hydraulic pressure or strain of a supporting mechanism, in other words, if a sensor therefor is mounted on a vehicle, the sensor may be connected to an extended terminal T5 or T6 to store the measured signals, which will then be converted into the load weight by the microcomputer 10.

Any data which are free from variable factor, such as date, a predetermined operation course, an operation site or identification number of a vehicle, are stored through an external input device "K" such as for example a keyboard in the microcomputer 10 in addition to the operation data.

The operation data processed in this way are stored in the IC card 6 through the IC card-writing device 5, which is then withdrawn by an operator after the termination of the operation.

This IC card 6 is subsequently inserted into an IC card-reproducing device (reader) 30A which is supervised by controlling personnel, and the operation data are read out. The operation data thus read out are then transmitted to a data analyzer (such as a hostcomputer) 30B comprising a microcomputer which is integral with or separate from the reader 30A, and subjected to data analysis in accordance with an operation control program and the like to prepare an operation daily report, an administration source material or an analysis source material.

If the external display output terminals 7 (T10, T11) are optionally provided to the output port 1b of the microcomputer 10, data stored in the IC card 6 can also be supplied to a printer or plotter for preparing an administration source material together with a display device such as CRT, LED or LCD. Accordingly, the operation data can be taken out as a hard copy before they are displayed in the external display device (not shown) of the data analysis device 30B.

When common operation data is required as in the case of a construction machinery or a vehicle, a fundamental operation data-processing means (such as operation data-processingmeans for travelling speed or revolution number of engine corresponding to a tachometer in this embodiment) as well as an optional operation data-processing means (such as dumping interval data-processing means) should preferably be provided to the system body 10, so as to allow the selection of a desired optional operation data-processing means in conformity with the content of the operation.

A single IC card may be commonly employed for storing the operation data-processing program as well as the operation data.

In this case, if the IC card reader 3 and the IC card writing device 5 are integrally combined (IC card reader/writer), the operation of insertion and withdrawal of the IC cards 4 and 6 can be conveniently omitted.

When this IC card comprises CPU and EPROM (or EEPROM), and has a relatively small capacity, all of the data (the above program) may be erased, after the data are read out with the IC card reader 3, by an erasing means (such as ultraviolet ray or electricity, which is not shown) so as to be utilized as a blank IC card for storing other operation data.

If the IC card has a large memory capacity and is capable of storing the above program together with the operation data, it is not required to erase these program or data, and new operation data can be stored in a blank portion of its memory.

In this invention, the external memory 4 for storing the operation data-processing program, as well as the external memory 6 for storing the operation data as processed are not limited to be an IC card as explained in the above embodiment, but may be any form of a transportable memory medium such as a card-type memory e.g. laser card, a magnetic tape, a memorypac, floppy-disk and photo-disk.

The external memory may be provided with an intelligent function which performs a processing on the basis of stored data.

Further, the operation data-processing means (the operation data-determining means) may also be provided with a malfunction-determining means which makes a judgement of whether predetermined standard values are exceeded or not by the detected data from sensors for detecting the operation conditions of each of components of a heavy duty machinery, such as a lubricating oil temperature sensor, a lubricating oil pressure sensor, an exhaust gas temperature sensor, an inhalated air temperature sensor, an inhalated air pressure sensor, a cooling water temperature sensor, a working member ejection pressure sensor or working oil temperature oil sensor.

In this case, it may be preferable to provide to the operation data-processing means either a malfunction-alarm device for informing to an operator or displaying in an external display device a malfunction of a specific component, or an emergency stop brake circuit or device (not shown) for stopping the operation of the specific component or the heavy duty vehicle itself.

It is also possible to provide the operation data-processingmeans (the operation data-determining means) with the optimum operation-determining means, which makes a judgement of whether each of the components of the vehicle is in an optimum operating condition (an optimum efficiency).

In this case, it would be preferable to provide an instruction display means as an external display device for instructing an operator to adjust the operation, which performs a comparison between a predetermined optimum value and detected data obtained from a sensor for detecting operation efficiency such as an engine revolution sensor, a fuel supply sensor, a pumping volume-detecting sensor or a pump ejection pressure-detecting sensor.

When it is judged that the operation should be terminated, the operator switches on a termination button thereby terminating the program.

Fig. 7 shows another embodiment of this invention, wherein actual work data obtained from the work data-processing means 10A is written (recorded) as time sequence data and as statistic data, respectively, in output data IC cards 6A, 6B.

When the detected signals are dually processed in the work data-processing means 10A to give both time sequence data and statistic data, these data are individually stored in separate external memories (IC cards).

To be more specific, the data processed by the data-processing means 10A is transferred as it is through an output port 1b to the data writer 5 as time sequence operation data and stored in the time sequence IC card 6A.

At the same time, the time sequence data is output to the work data-statistic processing means 10D.

This statistic processing means 10D is provided with a memory M which preliminarily contains a program for processing work data in accordance with a control specification, and therefore is capable of carrying out a statistical processing of work data.

In this embodiment, values of engine revolution and running speed are separated into suitable zones (numerical zones), and a judgement to which zone actual work data belong is conducted and a histogram showing a total number of these values is utilized.

The statistic data thus processed by the statistic processing means 10D is transferred one by one at each end of the operation, or totally after the completion of the whole operations, and written in the statistic data IC card 6B.

This data writer 5 includes a card insertion portion into which the time sequence data IC card 6A as well as the statistic data IC card 6B can be detachably inserted with easy operation. Time sequence operation data can be written into the time sequence IC card 6A, and statistic data can be written into the statistic data IC card 6B by this data writer 5.

The work data (or operation data) of each of the components may be written into an separate IC card 6A, or may be integrally written into one IC card 6A.

10M shows a monitoring means which judges whether actual work data is included in a predetermined unusual pattern, and when the said data is included in the unusual pattern, it records the data sequentially with high density to shorten intervals for sampling the actual work data of a certain component, and writes the data into the IC card 6A for sequential data through the data writer 5.

A plurality of contact points and a plurality of semiconductor memories corresponding to the contact points may be provided in one IC card, thereby allowing simultaneous writing of both time sequence data and statistic data by using a plurality of writing heads.

The time sequence data as well as statistic data may be individually stored in a virtual memory, thereby allowing these data to be alternately written into one memory such as an IC card.

If these structure are adopted, a multi-recording of data in one memory can be realized.

The actual work data (or operation data) which can be written in these memories include those of a total distance, engine revolution, vehicle speed, fuel consumption, hydraulic pressure of a work machine and actual working time.

By the way, the same constructions as the said embodiments are omitted their explanations fixing the same symbols.

According to this invention, it is possible to conduct a multi-recording of actual work data by storing time sequence data within one memory, and statistic data within another memory.

Accordingly, it is possible to immediately obtain analyzed operation data from the statistic data, and at the same time data of tachometer and if desired variously analyzed data as viewed at a variable angle from the time sequence data, so that a minute control of a work machine such as for example detection of malfunction of an efficiency improvement can be realized.

Further, since both of these data are based on the same actual operation data, it is possible to back up each other, thereby making it very easy to cope with an accident such as loss or erasure of the data.

According to this invention, work schedule data of a work machine is stored in an external memory for input data, and actual work data obtained from a sensor or measuring means is fed back to an operator, so that it is possible to perform an optimum manipulation of the work machine by the operator, or this optimum manipulation can be automated. In this manner, it is possible to control actual work data by recording the actual work data in an external memory for output data.

Since a memory which is utilized as an external memory for input data is converted into an external memory for output data, the storing of work schedule or target information and details of the work performed can be easily carried out, thereby making it easy to control the memory.

## Claims

1. A system for recording operation data of a working machine, comprising
   a work data-processing means (10A), which obtains sequential work data on the basis of a sensor or measuring means (S) to detect and measure actual work conditions of a working machine, and
   a data-recording means (5) to write and record each of the sequential work data which is obtained from the said work data-processing means (10A) to a transportable external memory (6A) for output data which is attached detachably,

**characterized by**

a statistic processing means (10D) to process said sequential work data according to a certain statistic technique, and

a monitoring means (10M) which feeds back operation data to said work data-processing means (10A), shortens an interval (unit time) for sampling data which are input from the sensor means (S) and records operation data with high density when an unusualness is detected,

wherein said data-recording means (5) records the statistic data which is obtained from the statistic processing means (10D) after a certain statistic processing on said or a further transportable external memory 6B for output data which is attached detachably.

2. The system according to claim 1, **characterized in** that each of the external memories (6A,6B) is in the form of a card type memory medium such as an IC card or a laser card.

**Revendications**

1. Système destiné à enregistrer des données de fonctionnement d'une machine en cours de fonctionnement, comprenant :

- un ensemble de traitement des données de fonctionnement (10A) qui saisit des données de fonctionnement séquentielles grâce à un capteur ou un ensemble de mesure (S) pour détecter et mesurer les conditions de fonctionnement effectives d'une machine en cours de fonctionnement, et

- un ensemble d'enregistrement des données (5) pour écrire et enregistrer chacune des données de fonctionnement séquentielles obtenue à partir de l'ensemble de traitement des données de fonctionnement (10A) dans une mémoire extérieure transportable (6A) pour données de sortie qui est fixée de façon amovible, caractérisé par :

- un ensemble de traitement statique (10D) pour traiter lesdites données de fonctionnement séquentielles selon une certaine technique statistique, et

- un ensemble de contrôle (10M) qui renvoie des données de fonctionnement à l'ensemble de traitement des données de fonctionnement (10A), raccourcit un intervalle (temps unitaire) pour échantillonner des données entrant en provenance de l'ensemble capteur (S) et enregistre des données de fonctionnement avec une forte densité lorsqu'une anomalie est détectée,

- ledit ensemble d'enregistrement des données (5) enregistrant les données statistiques obtenues de l'ensemble de traitement statistique (10D) après un certain traitement statistique sur ladite mémoire (6B) pour données de sortie ou une autre mémoire extérieure transportable pour donnés de sortie, qui est fixée de façon amovible.

2. Système selon la revendication 1, caractérisé en ce que chacune des mémoires extérieures (6A, 6B) se présente sous la forme d'un support d'information de mémoire de type à carte tel qu'une carte de circuits intégrés ou une carte laser.

**Ansprüche**

1. System zur Aufzeichnung von Betriebsdaten einer Arbeitsmaschine, das

eine Arbeitsdaten-Verarbeitungseinrichtung (10A), die aufeinanderfolgende Arbeitsdaten auf der Grundlage einer Sensor-oder Meßvorrichtung (S) erhält, um tatsächliche Arbeitszustände einer Arbeitsmaschine zu erfassen und zu messen, und

eine Datenaufzeichnungsvorrichtung (5) enthält, um die aus der Arbeitsdaten-Verarbeitungseinrichtung (10A) erhaltenen aufeinanderfolgenden Arbeitsdaten in einem lösbar angeschlossenen transportablen externen Ausgangsdatenspeicher (6A) einzuschreiben und aufzuzeichnen,

**gekennzeichnet durch**

eine Statistik-Aufbereitungseinrichtung (10D) zum Aufbereiten der aufeinanderfolgenden Arbeitsdaten gemäß einem bestimmten statistischen Verfahren und

eine Überwachungseinrichtung (10M), die Betriebsdaten zu der Arbeitsdaten-Verarbeitungseinrichtung (10A) zurückführt, einen Zeitabstand (eine Zeiteinheit) für die Abfrage der aus der Sensorvorrichtung (S) eingegebenen Daten verkürzt und die Betriebsdaten mit hoher Dichte aufzeichnet, wenn eine Abnormalität ermittelt wird,

wobei die Datenaufzeichnungsvorrichtung (5) die aus der Statistik-Aufbereitungseinrichtung (10D) nach einer bestimmten statistischen Aufbereitung erhaltenen statistischen Daten in dem genannten oder in einem weiteren lösbar angeschlossenen transportablen externen Ausgabedatenspeicher (6B) aufzeichnet.

2.  System nach Anspruch 1,
    **dadurch gekennzeichnet,**
    daß jeder der externen Speicher (6A, 6B) die Form eines Speichermaterials in Kartenausführung wie einer Integrationsschaltungskarte oder einer Laserkarte hat.

# FIG.1

FIG.2